# EUROPEAN PATENT APPLICATION

(11) **EP 2 637 416 A1**
(43) Date of publication of application: **11.09.2013**
(21) Application number: 12290074.9
(22) Date of filing: 06.03.2012
(51) Int. Cl.: H04N 21/658, H04N 21/45, H04N 21/2365, H04N 21/6587, H04N 21/266, H04N 21/218, H04N 21/258, H04N 13/04, H04N 13/00

(54) **A system and method for optimized streaming of variable multi-viewpoint media**

(71) Applicant: Alcatel Lucent, 75007 Paris (FR)
(72) Inventor: Stevens, Christoph, 9190 Stekene (BE); De Loof, Jourik, 2630 Aartselaar (BE)
(74) Representative: IP Hills NV

(57) **Abstract**

The invention concerns a system and method for streaming multi-viewpoint media comprising plural views of a media item between a cloud platform (100) and a client device (201, 202, 203, 204, 205, 206) that both form part of said system. The cloud platform (100) is adapted to stream only views of the media item that are selected by the client device (201, 202, 203, 204, 205, 206).

## Description

### Field of the Invention

The present invention generally relates to streaming media from a cloud platform to a client device, e.g. a smartphone, media player, tablet PC, video codec, etc. The invention in particular concerns efficient streaming of multi-viewpoint media, i.e. media items that are available in plural versions or views with or without depth of which only one is actively viewed at a given time or of which plural views are consumed simultaneously in the context of stereoscopic content viewing, e.g. the frame packaging arrangement (fpa) such as most commonly used: top and bottom views, side by side views, interleaved views, etc., or 2D+Z views, etc., eventually with different resolutions.

### Background of the Invention

Today, almost any electronic client device is equipped with a display, network connectivity, processing capacity (CPU/GPU) and software application(s) enabling the user to view and interact with video or more generally to consume media that are streamed from a cloud platform, i.e. a network of servers where content is stored. Typically, the client device shall receive a unicast stream or multicast stream that is decoded and displayed.

In the context of stereoscopic consumption of media, i.e. simultaneous display of two views in a frame packaging arrangement like for instance top & bottom views, side by side views, interleaved views, etc., or 2D+Z views, etc., the client device displays two views of the same content item simultaneously. Due to the nature of different client devices with different capabilities consuming different forms of stereoscopic content with different type of encoding and delivery models, a lot of overlap exists regarding viewpoint info and bandwidth consumption.

In the future, consumption of video is expected to evolve towards multi-viewpoint, free viewpoint, and multi-view 3D television, meaning a single media item will be available in plural views or versions a number of which are used at the client device depending on the desired user experience. As an example, several camera views of a sports game can be streamed from a cloud platform to the client device enabling the user for instance to switch camera while watching the sports game.

At present, it is possible to transfer a secondary stream that consists for instance of the left or right view in a single H.264 stream that can be decoded by a decoder supporting the ITU-T H.264 video encoding standard. It is assumed then that the decoder has two buffers and sufficient computing capacity in order to decode the two streams simultaneously.

In order to support more views of a media item, e.g. 7 to 9 views, the client device has to support Multi Video Coding or MVC, an extension of the H.264 standard. The number of client devices that supports MVC today still is rather limited: all devices labelled with "Blu-ray 3D" support MVC.

Existing solutions for streaming multi-viewpoint media are inefficient. The bandwidth consumption is excessive, even if certain views are streamed with reduced resolution due to the lack of optimal encoding possibilities, and the streaming service cost is high since all views are either simulcasted, i.e. streamed simultaneously as part of independent streams, or encoded and transferred from the cloud platform to the client device as part of a single unicast or multicast stream. Due to the nature of different client devices with different capabilities consuming different forms of stereoscopic content with different types of encoding and delivery models, a lot of overlap regarding viewpoint info and bandwidth is consumed.

It is an objective of the present invention to disclose a system and method for streaming multi-viewpoint media that resolves the above mentioned drawbacks of existing solutions. More particularly, it is an objective to provide a system and method for streaming multi-viewpoint media with reduced streaming service cost and reduced bandwidth consumption in the network.

### Summary of the Invention

According to the present invention, the above identified shortcomings of the prior art solutions are resolved by a system for streaming multi-viewpoint media comprising plural views of a media item between a cloud platform and a client device that form part of the system, as defined by claim 1, wherein the cloud platform is adapted to stream only views of the media item selected by the client device.

Thus, according to the invention, the client device decides which combination of unicast and multicast streams are needed for optimal user experience, and only these streams of the media item are transferred from the cloud platform to the client device. The client device may select the streams based on user input and/or based on consumed content history. As a consequence, the system according to the invention shall save bandwidth in the network, reduce the streaming service cost in the cloud platform, and increase the user experience. This way, flexible viewpoint switching and multi-view 3D television become possible while optimizing the impact on bandwidth usage.

As defined by claim 2, the cloud platform in the system for streaming multi-viewpoint media according to the present invention may comprise:
- means for receiving specifications of a display of the client device;
- means for receiving an amount of views supported by the client device;
- means for informing the client on available views of the media item; and
- means for receiving from the client device information indicative for a selection of available views for streaming towards the client.

Thus, in a preferred embodiment of the invention, the client device reports technical specifications of its display like the size and resolution, and also the maximum number of parallel views of an item supported by the client device. The cloud platform thereupon indicates which multicast and unicast streams of the requested media item are available for display on the client device, and the client makes a selection of the multicast and unicast streams it desires to receive from the cloud platform.

In addition, the cloud platform in the system according to the present invention may comprise means that optimize the consumption of 3D/multi-view content from the client device, e.g. taking into account positioning of the viewer, proximity, light conditions, etc. The cloud platform also may comprise means for receiving information indicative for the location of the client device in order to enable selection of the closest cloud instance to thereby optimize the latency and user experience.

Optionally, as defined by claim 3, the cloud platform in the system according to the present invention may further comprise:
- means for sending to the client device information hinting towards certain available views of the media item.

Indeed, in order to further enhance user experience, data could be inserted in the stream hinting towards optimal viewing possibilities on the client device. Such hinting data may for instance be based on the user's interaction history, knowledge of earlier consumed media items, overlap with streams transferred to other users, the load on the cloud platform, rendering and encoding infrastructure or other resources, etc. This way, a viewpoint that has already been rendered and encoded can be reused, further increasing the efficiency of the system.

Further optionally, as defined by claim 4, the cloud platform in the system according to the present invention further comprises:
- means for receiving from the client device switching information indicative for changes in the selection of available views, the switching information being generated by the client device dependent on user input and/or dependent on consumed media history.

Thus, the client device may inform the cloud platform on changes in the selection of unicast streams and multicast streams of a media item it desires to receive. Such changes may be instructed by the user holding the client device, or may be dynamically generated by the client device based on historic data of consumed media items.

In addition to a system for streaming multi-viewpoint media as defined by claim 1, the present invention also relates to a method for streaming multi-viewpoint media comprising plural views of a media item between a cloud platform and a client device, as defined by claim 5, the method comprising streaming from the cloud platform to the client device only views of the media item selected by the client device.

Further, the present invention also relates to a cloud platform as defined by claim 6 and a client device as defined by claim 7, adapted for use in the system as defined by claim 1.

### Brief Description of the Drawings

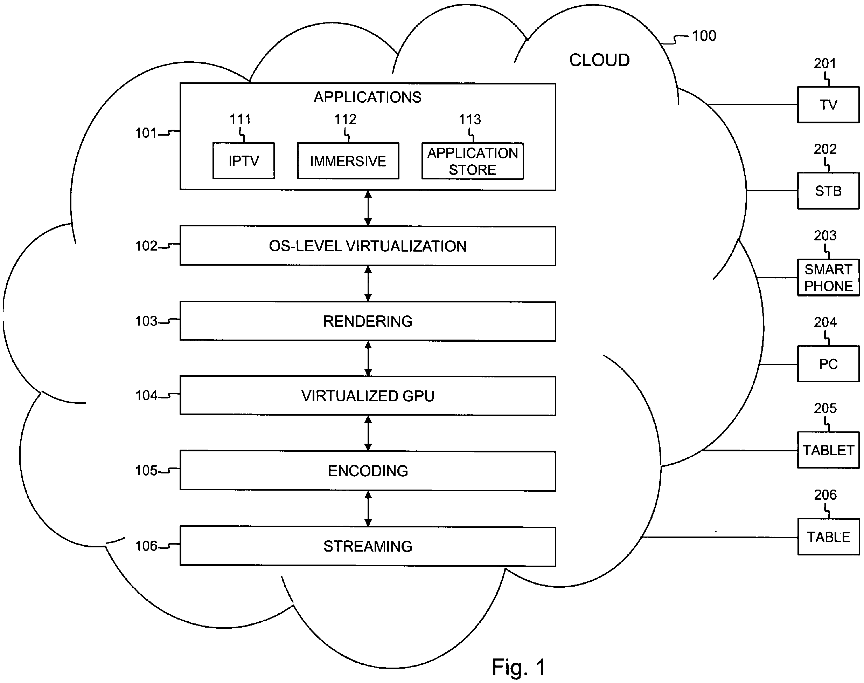

Fig. 1 illustrates an embodiment of the system for streaming multi-viewpoint media according to the present invention.

### Detailed Description of Embodiment(s)

Fig. 1 shows a system wherein a client device, e.g. TV 201 or Set-Top Box 202 or smart phone 203 or PC 204 or tablet 205 or table or flat surface 206 or any other client device capable of consuming stereoscopic or multi-view content, decides which streams or combination of video unicast and multicast stereoscopic streams are needed for optimal user experience, and wherein only these streams are transported from a cloud platform 100 to the client device. The cloud platform 100 hosts applications 101, operation system level virtualization 102, a rendering function 103, a virtualized graphical processing unit 104, an encoding function 105 and a streaming function 106. The invention is also applicable in a distributed cloud platform containing one or more of the above mentioned parts 101-106 closer to the user to optimize user experience. Indeed, the cloud can be a distributed cloud with virtualized GPU enabling rendering of multiple viewpoints in memory and enabling switching between such viewpoints without overhead, as described for instance in European Patent Application No. EP 2 400 385 entitled "Interface Between a Plurality of Graphical Applications". The client device selects the video streams based on user input, cloud hinting and/or based on the consumed content history. The consumed content may for instance hint the client device to search for another viewpoint.

In the embodiment of the present invention illustrated by Fig. 1, every application 101, like for instance IPTV application 111, immersive communication application 112 or application store 113, is consumed as a video stream. Thereto, a lightweight client software module is installed on the client devices 201, 202, 203, 204, 205 and 206. If a user desires to consume an application, the user connects via its client device to the cloud platform 100, hereby indicating the specifications of the display of the client device, e.g. the resolution and size, and the number of supported views by the client device.

The cloud platform 100 will then indicate via messaging to the client device, 201, 202, 203 or 204, which unicast and multicast streams are available, depending on the application that the client device wants to consume. The cloud platform 100 could do this for instance based on the load of the virtualized graphical processing unit (GPU) 104 with the goal of reusing a viewpoint that is already being rendered by the rendering function 103 and/or encoded by the encoding function 105. As a result, no additional viewpoint may have to be rendered, encoded and transported thus increasing the efficiency of the cloud platform 100.

Additional hinting data could be inserted into the stream indicating the optimal possibilities. Stereoscopic viewpoint switching can be based on user input, which can be based on the hints of the cloud platform. The latter applies also if users for instance are able to consume a number of viewpoints simultaneously, and some of them are overlapping such as in an immersive communications application 112.

The above could also be used to track the user's attention in an immersive experience, and let the client device dynamically switch between viewpoints. The switching can be a result of the application workflow and/or be based on user input.

The system illustrated by Fig. 1 allows flexible viewpoint switching in an application with the goal of increasing user experience, optimizing bandwidth usage and optimizing the rendering and encoding of the viewpoint streams. This is similar to switching the camera in a game but then applied with several channels of streaming video.

In addition to increased user experience, flexibility and bandwidth savings, the system illustrated by Fig. 1 could offer additional load balancing as well.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for streaming multi-viewpoint media comprising plural views of a media item between a cloud platform (100) and a client device (201, 202, 203, 204, 205, 206) that form part of said system,
**CHARACTERIZED IN THAT** said cloud platform (100) is adapted to stream only views of said media item selected by said client device (201, 202, 203, 204, 205, 206).

2. A system for streaming multi-viewpoint media according to claim 1, wherein said cloud platform (100) comprises:
- means for receiving specifications of a display of said client device (201, 202, 203, 204, 205, 206);
- means for receiving an amount of views supported by said client device (201, 202, 203, 204, 205, 206);
- means for informing said client device (201, 202, 203, 204, 205, 206) on available views of said media item; and
- means for receiving from said client device (201, 202, 203, 204, 205, 206) information indicative for a selection of available views for streaming towards said client (201, 202, 203, 204, 205, 206).

3. A system for streaming multi-viewpoint media according to claim 2, wherein said cloud platform (100) further comprises:
- means for sending to said client device (201, 202, 203, 204, 205, 206) information hinting towards certain available views of said media item.

4. A system for streaming multi-viewpoint media according to claim 2, wherein said cloud platform (100) further comprises:
- means for receiving from said client device (201, 202, 203, 204, 205, 206) switching information indicative for changes in said selection of available views, said switching information being generated by said client device (201, 202, 203, 204, 205, 206) dependent on user input and/or dependent on consumed media history.

5. A method for streaming multi-viewpoint media comprising plural views of a media item between a cloud platform (100) and a client device (201, 202, 203, 204, 205, 206),
**CHARACTERIZED IN THAT** said method comprises streaming from said cloud platform (100) to said client device (201, 202, 203, 204, 205, 206) only views of said media item selected by said client device (201, 202, 203, 204, 205, 206).

6. A cloud platform (100) for use in a system as defined by claim 1.

7. A client device (201, 202, 203, 204, 205, 206) for use in a system as defined by claim 1.
